# FASCICULE DE BREVET EUROPEEN

(11) **EP 2 080 339 B1**
(45) Date de publication et mention de la délivrance du brevet: **05.05.2010**
(21) Numéro de dépôt: 07858586.6
(22) Date de dépôt: 15.10.2007
(51) Int. Cl.: H04L 29/06, H04L 12/56

(54) **PROCEDE DE ROUTAGE D'UN MESSAGE SIP EN CAS D'INDISPONIBILITE DE NOEUDS INTERMEDIAIRES**
VERFAHREN ZUM ROUTING EINER SIP-NACHRICHT IM FALL NICHT VERFÜGBARER ZWISCHENKNOTEN
METHOD OF ROUTING AN SIP MESSAGE IN CASE OF UNAVAILABILITY OF INTERMEDIATE NODES

(30) Priorité: 16.10.2006 FR 0654297
(43) Date de publication de la demande: 22.07.2009
(73) Titulaire: FRANCE TELECOM, 75015 Paris (FR)
(72) Inventeur: PROUVOST, Sébastien, 31300 Toulouse (FR); CHADLI, Youssef, 78800 Houilles (FR)
(86) Numéro de dépôt international: PCT/FR2007/052159
(87) Numéro de publication internationale: WO 2008/047037

(56) Documents cités:
- WO-A-2005/077014
- US-A1- 2003 167 293
- US-A1- 2003 174 648
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-CN1, no. V530, décembre 2002 (2002-12), XP014008075 ISSN: 0000-0001

## Description

La présente invention concerne un procédé de routage d'un message SIP destiné à être routé à travers des entités intermédiaires constituant des noeuds d'un chemin de signalisation.

L'invention trouve une application particulièrement avantageuse dans les situations où une ou plusieurs entités intermédiaires par lesquelles doit transiter le message sont indisponibles et ne peuvent donc être jointes par d'autres entités se trouvant sur le même chemin de signalisation.

Un réseau de télécommunication est composé de différentes entités intermédiaires par lesquelles transitent les messages de signalisation véhiculés entre une entité émettrice et une entité destinataire. Un message de signalisation contient des informations liées à un appel de l'entité émettrice vers l'entité destinataire, comme la demande d'établissement de l'appel, ainsi que d'autres informations, comme par exemple la notification de la présence de messages sur une messagerie.

Ces entités intermédiaires peuvent avoir des rôles très variables qui vont du routage du message de signalisation aux actions à effectuer sur ce message, telles que l'insertion ou la suppression de certaines informations en vue de fournir un service particulier.

Le protocole SIP (« Session Initiation Protocol ») est un protocole défini par l'IETF (« Internet Engineering Task Force ») avec pour objectif initial de permettre l'établissement, la modification et la terminaison de sessions multimédia dans un réseau IP. Le protocole SIP a également été retenu par différents organismes de normalisation ou consortium comme le 3GPP (« 3rd Generation Partnership Project ») ou TISPAN (« Telecoms & Internet converged Services & Protocols for Advanced Networks ») dans le cadre de leur définition d'architectures de commande de réseaux basés sur un transport IP. Parmi ces architectures, on peut citer celle connue sous l'acronyme IMS (« IP Multimedia Sub-system »). SIP a donc vocation à s'imposer à l'avenir comme le protocole d'établissement de sessions utilisé dans les réseaux publics opérés qu'ils soient mobiles ou fixes.

Par rapport aux autres protocoles de signalisation, SIP se caractérise par sa capacité à véhiculer les informations de routage à travers les messages SIP eux-mêmes. En effet, la première requête initiant une session, dite requête initiale, peut contenir les adresses des entités qu'elle doit traverser. Ces données sont renseignées dans le message de requête initiale par l'entité émettrice à l'origine de la session, ces données ayant été récupérées par l'entité émettrice au moment de son enregistrement dans le réseau ou via d'autres mécanismes. Le chemin de signalisation correspondant à la session est établi au moment du passage de la requête initiale en fonction de la destination de l'appel, de l'architecture du réseau et des services nécessaires pour cette session. Les requêtes subséquentes et les réponses SIP contiennent toutes les données nécessaires à leur routage. C'est une différence majeure par rapport aux autres protocoles pour lesquels le routage se base essentiellement sur des tables présentes dans les entités réseau et sur la mémorisation des données de routage liées à l'appel par les entités impliquées dans cet appel.

Les messages SIP sont de deux types : les requêtes et leurs réponses. Les réponses suivent le chemin inverse de la requête à laquelle elles sont associées.

Parmi les requêtes, on distingue les requêtes initiales et les requêtes subséquentes. Les requêtes subséquentes sont les requêtes appartenant à un même dialogue SIP créé par une requête initiale émise par une entité émettrice. Seules certaines requêtes initiales peuvent créer un dialogue SIP, c'est le cas par exemple du message INVITE. Le chemin des requêtes subséquentes, c'est-à-dire l'ensemble des entités SIP du réseau que doivent traverser toutes les requêtes appartenant à ce dialogue, est déterminé lors du passage de la requête initiale créant ce dialogue.

Un message SIP de requête initiale comporte un en-tête "Request-URI" (URI pour « Uniform Resource Identifier ») qui contient l'adresse de l'entité destinataire de la requête. Une requête SIP peut optionnellement comporter un en-tête particulier nommé « Route » qui contient par ordre décroissant, la liste des identités, sous forme d'URIs, des entités à traverser avant d'atteindre la destination, il s'agit des entités intermédiaires par lesquelles la requête doit passer.

Une entité SIP intermédiaire, typiquement un proxy SIP, recevant une requête initiale procède à l'analyse de celle-ci. Si cette requête contient un en-tête « Route », alors elle considère la première entité SIP présente dans cet en-tête comme l'entité à qui elle doit faire suivre la requête. Sinon, elle détermine l'entité suivante à laquelle la requête doit être envoyée à partir de l'en-tête « Request-URI » en utilisant des mécanismes spécifiques de routage.

Toute entité SIP, intermédiaire ou non, a la possibilité d'ajouter un en-tête « Route » ou d'ajouter l'identité URI d'entités additionnelles dans un en-tête « Route » existant. Les utilisations de cette fonctionnalité sont très nombreuses. Elle permet par exemple à la première entité contactée du réseau d'ajouter dans l'en-tête « Route » l'identité de l'entité responsable de la gestion des services alloués à l'usager de l'entité émettrice de la requête, afin de garantir que la requête passe par cette entité. Les entités responsables de la gestion des services sont connues sous le nom de serveurs d'application AS (« Application Server »).

Les entités SIP intermédiaires traversées par la requête initiale désirant rester dans le chemin de signalisation insèrent leur identité dans un en-tête « Record-Route » de la requête initiale avant de la transférer au noeud suivant.

Les identités présentes dans l'en-tête « Record-Route » lors du passage de la requête initiale sont reprises dans l'en-tête « Route » des requêtes subséquentes. Le routage de ces requêtes se fait de la manière suivante. Une entité SIP intermédiaire recevant une requête SIP subséquente procède à son analyse. Si la requête contient un en-tête « Route », alors elle considère la première entité SIP présente dans cet en-tête comme l'entité à qui elle doit faire suivre la requête. Sinon, elle considère l'entité présente dans l'en-tête « Request-URI » comme l'entité à qui elle doit faire suivre la requête.

Lors du passage d'une requête SIP, chaque entité traversée ajoute son adresse dans un en-tête appelé « Via ». Ainsi, cet en-tête accumule dans l'ordre toutes les adresses des entités SIP traversées y compris l'adresse de l'entité émettrice de la requête.

Lorsqu'une entité génère une réponse à une requête, cette entité pouvant être l'entité destinataire de la requête ou une entité intermédiaire, elle y insère un en-tête « Via » contenant les adresses reçues dans le champ « Via » de la requête en conservant le même ordre. Chaque entité recevant cette réponse, et si elle décide de la transférer au noeud suivant, l'envoie à l'adresse figurant en premier lieu dans l'en-tête « Via » de cette réponse.

D'une manière générale, il peut se produire que des entités intermédiaires ne soient pas accessibles à un instant donné, en cas de panne de l'équipement ou de surcharge par exemple. Dans de telles circonstances, le réseau peut avoir deux comportements : soit un message devant transiter par une telle entité est rejeté, soit un chemin alternatif est trouvé afin de permettre au message d'être néanmoins véhiculé vers sa destination. Ce comportement peut dépendre notamment des caractéristiques de l'entité concernée, à savoir si elle est indispensable ou non, et du type de message de signalisation.

Pour sa part, le protocole SIP n'offre généralement pas cette alternative et n'autorise que la première solution, c'est-à-dire le rejet du message.

C'est ainsi que lorsqu'une entité intermédiaire détermine que la première entité SIP présente dans l'en-tête « Route » d'une requête n'est pas accessible, alors elle peut remonter une réponse d'échec vers l'entité émettrice, même s'il aurait été préférable de faire transiter la requête jusqu'à destination en évitant cette entité intermédiaire inaccessible, quitte à ne pas bénéficier des traitements qu'elle aurait dû effectuer.

De même, lorsqu'une entité intermédiaire décide de transmettre une réponse SIP au noeud suivant, si l'entité SIP dont l'adresse est la première dans l'en-tête « Via » de cette réponse n'est pas accessible, alors elle arrête l'envoi de cette réponse et peut même annuler la transaction correspondant à cette réponse, même s'il aurait été préférable de faire transiter cette réponse jusqu'à la destination en évitant cette entité intermédiaire inaccessible.

Le document WO 2005/077014 décrit un procédé de routage d'un message SIP dans un réseau de télécommunication.

Aussi, il existe un besoin d'une technique permettant d'éviter le rejet d'un message lorsqu'une entité intermédiaire située sur un chemin de signalisation du message n'est pas disponible.

L'invention répond à ce besoin en proposant un procédé de routage dans un réseau de télécommunication d'un message SIP destiné à être routé à travers des entités intermédiaires constituant des noeuds d'un chemin de signalisation, remarquable en ce que ledit procédé comprend une étape de contournement d'au moins une entité intermédiaire apte à être contournée en cas d'indisponibilité, ladite étape de contournement étant réalisée par suppression de l'identité de ladite entité intermédiaire à contourner dans un en-tête d'un message SIP contenant la liste des identités des entités à traverser.

L'invention présente donc l'avantage de permettre le transit d'un message SIP jusqu'à sa destination même s'il ne peut pas transiter par une entité intermédiaire indiquée par l'en-tête « Route » ou « Via ». Cette fonctionnalité est d'une grande utilité lorsque les fonctions fournies par l'entité inaccessible ne sont pas primordiales au bon fonctionnement du système et qu'il est préférable que la requête ou la réponse transite jusqu'à sa destination en évitant cette entité plutôt qu'elle soit rejetée.

Avantageusement, le procédé de routage conforme à l'invention comprend une étape destinée à déterminer si une entité intermédiaire est apte à être contournée en cas d'indisponibilité.

Selon un premier mode de réalisation, ladite étape de détermination est mise en oeuvre par une entité au moyen d'une donnée locale indiquant si ladite entité intermédiaire est apte à être contournée.

Selon un deuxième mode de réalisation, ladite étape de détermination est mise en oeuvre par une entité en consultant une base de données externe indiquant si ladite entité intermédiaire est apte à être contournée.

Selon un troisième mode de réalisation, ladite étape de détermination est mise en oeuvre par insertion dans un en-tête de routage dudit message SIP un indicateur de contournement de ladite entité intermédiaire apte à être contournée.

On observera que l'invention ne présente pas de divergence majeure par rapport au protocole SIP. Elle ne nécessite en effet l'implémentation d'un fonctionnement particulier que par l'entité intermédiaire mettant en oeuvre le procédé objet l'invention, cette entité pouvant très bien s'insérer au milieu d'autres entités conformes à SIP et fonctionnant de manière habituelle.

Selon un mode de réalisation de l'invention concernant les messages de requête, ledit en-tête est l'en-tête « Route » d'un message SIP de requête émis par une entité émettrice.

Selon une première mise en oeuvre de ce mode de réalisation, ledit indicateur de contournement de ladite entité intermédiaire est communiqué à l'entité émettrice d'un message de requête initiale lors de l'enregistrement de ladite entité émettrice dans le réseau de télécommunication. Les en-têtes utilisés sont alors « Path » du message REGISTER et « Service-Route » du message 200 OK de réponse au message REGISTER.

Selon une deuxième mise en oeuvre de ce mode de réalisation, ledit indicateur de contournement de ladite entité intermédiaire est communiqué à l'entité émettrice préalablement à l'émission d'un message de requête initiale.

Dans une troisième mise en oeuvre de ce mode de réalisation, ledit indicateur de contournement est inséré par ladite entité intermédiaire dans l'en-tête « Record-Route » au passage d'un message de requête initiale, ledit en-tête « Record-Route » étant reçu par l'entité émettrice dudit message de requête initiale dans un message de réponse à ladite requête initiale et recopié par ladite entité émettrice dans l'en-tête « Route » d'un message de requête subséquente.

Dans une quatrième mise en oeuvre de ce mode de réalisation, ledit indicateur de contournement est inséré par une entité intermédiaire autre que ladite entité intermédiaire dans l'en-tête « Route au passage d'un message de requête initiale.

Selon un autre mode de réalisation concernant les messages de réponse, ledit en-tête est l'en-tête « Via » d'un message SIP de requête.

Dans ce mode de réalisation, l'invention prévoit que ledit indicateur de contournement est inséré par ladite entité intermédiaire dans l'en-tête « Via » d'un message de requête. L'en-tête « Via » est ensuite recopié dans les messages de réponse par l'entité émettant ces réponses.

L'invention concerne également une entité intermédiaire constituant un noeud d'un chemin de signalisation pour le routage d'un message SIP dans un réseau de télécommunication, remarquable en ce que ladite entité intermédiaire est apte à insérer dans un en-tête de routage dudit message SIP un indicateur de contournement lorsque ladite entité est en situation d'indisponibilité.

L'invention concerne en outre une entité constituant un noeud d'un chemin de signalisation pour le routage d'un message SIP dans un réseau de télécommunication, remarquable en ce que ladite entité comprend des moyens pour contourner une entité intermédiaire en cas d'indisponibilité de ladite entité intermédiaire, lesdits moyens étant aptes à supprimer l'identité de ladite entité intermédiaire à contourner dans un en-tête d'un message SIP contenant la liste des identités des entités à traverser.

Il est prévu également par l'invention que ladite entité comprenne des moyens pour déterminer si une entité intermédiaire est apte à être contournée en cas d'indisponibilité.

L'invention concerne par ailleurs un programme d'ordinateur comprenant des instructions de programme pour la mise en oeuvre du procédé selon l'invention lorsque ledit programme est exécuté par un ordinateur.

Enfin, l'invention concerne un signal transportant un message SIP comprenant dans un en-tête de routage un indicateur de contournement d'au moins une entité intermédiaire apte à être contournée en cas d'indisponibilité dans un chemin de signalisation.

La description qui va suivre en regard des dessins annexés, donnés à titre d'exemples non limitatifs, fera bien comprendre en quoi consiste l'invention et comment elle peut être réalisée.

La figure 1 est un schéma illustrant un procédé de routage d'un message de requête SIP dans un réseau à architecture IMS.

La figure 2 est un diagramme de routage selon l'invention de messages de signalisation entre diverses entités constituant les noeuds du réseau IMS de la figure 1.

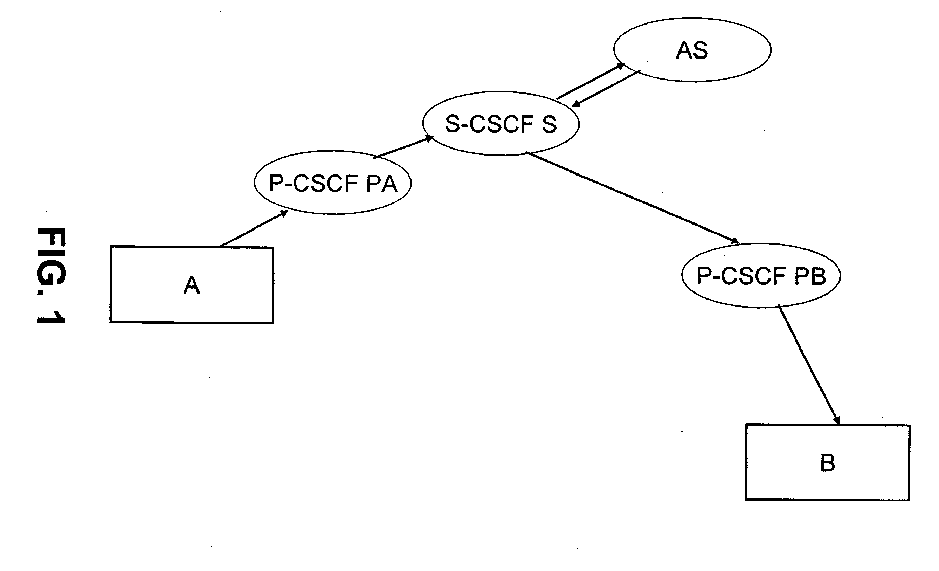

Sur la figure 1 est représenté un chemin de signalisation d'un message de requête SIP émis dans un réseau IMS par une entité émettrice A vers une entité destinataire B. Ces entités A et B sont par exemple des terminaux téléphoniques, fixes ou mobiles, le terminal A initiant un appel téléphonique à destination du terminal B.

L'architecture IMS est actuellement définie essentiellement pour des applications de type téléphonie, visiophonie, présence et messagerie instantanée.

Entre les deux terminaux A et B, le réseau de la figure 1 comprend diverses entités intermédiaires parmi lesquelles on trouve :
- des serveurs mandataires, ou proxy, P-CSCF (« Proxy-Call Server Control Function ») PA et PB qui sont les premiers points de contact des terminaux A et B dans le réseau IMS et qui gèrent l'interaction avec les ressources du réseau de transport,
- un serveur S-CSCF (« Serving-Call Server Control Function ») S qui gère le terminal A dans le réseau IMS et, notamment, les points de déclenchement vers des serveurs d'application auprès desquels l'utilisateur du terminal A a souscrit à un ou plusieurs services. Le serveur S-CSCF S est attribué au terminal A lors de son enregistrement dans le réseau IMS.
- un serveur d'application, noté AS (« Application Server »), associé au service considéré, par exemple le service de « transfert d'appel ». Le serveur d'application AS contient toutes les informations relatives au service souscrit.

Lorsqu'une entité intermédiaire reçoit un message SIP de requête initiale ou subséquente contenant un en-tête « Route », ou un message SIP de réponse contenant un en-tête « Via », elle doit transférer ce message au noeud suivant du chemin de signalisation indiqué dans l'en-tête « Route » ou l'en-tête « Via ». Cependant, si ce noeud n'est pas joignable car indisponible, l'entité intermédiaire peut décider de le contourner et d'envoyer le message SIP au noeud suivant dans l'en-tête concerné. Si ce dernier est également non accessible, l'entité intermédiaire peut décider aussi de le contourner.

Trois mécanismes doivent alors être distingués :
- déterminer qu'une entité est non joignable,
- dans le cas où une entité est non joignable, déterminer si cette entité doit être contournée ou non,
- contourner une entité présente dans l'en-tête « Route » dans le cas d'une requête SIP ou dans l'en-tête « Via » dans le cas d'une réponse SIP.

Une entité SIP peut déterminer qu'une autre entité est non joignable de deux façons :
- au moyen d'un mécanisme de détection d'activité (« Keep alive ») au niveau de la couche physique de transport entre les deux entités. On peut citer par exemple les messages Hello que les terminaux envoient périodiquement pour indiquer leur présence sur le réseau. Si un terminal n'émet plus un tel message, il est considéré comme indisponible.
- émission d'un message d'échec par la couche physique de transport lors de la tentative de transmission de la requête ou de la réponse SIP.

Après avoir déterminé qu'une autre entité n'est pas disponible, une entité intermédiaire doit savoir si cette autre entité peut être contournée ou non, ceci en fonction du caractère indispensable ou non du passage du message SIP par l'entité indisponible. Par exemple, la fonction « transfert d'appel » n'est pas indispensable à l'établissement et au maintien d'un appel téléphonique entre les terminaux A et B. Aussi, dans le cas où le serveur d'application AS en charge de cette fonction devient indisponible, il doit pouvoir être contourné par les messages SIP de requête ou de réponse.

La détermination par une première entité si une autre entité non joignable doit être contournée ou non peut se faire de plusieurs façons.

Selon une première méthode, la première entité dispose d'une donnée locale lui permettant de savoir si l'entité non joignable est contournable ou non dans un contexte donné. Par exemple, le terminal A contient une donnée l'autorisant à contourner le serveur proxy PA en cas d'indisponibilité.

Selon une deuxième méthode, la première entité consulte un serveur ou une base de données externe pour obtenir cette même information.

L'invention propose encore une autre méthode selon laquelle l'information portant sur le fait de savoir si l'entité non joignable peut être contournée si elle est non joignable est associée à l'identité de cette entité dans l'en-tête « Route » ou « Via » du message SIP concerné. Cette information est contenue dans un nouveau paramètre de l'URI de l'entité indisponible, appelé indicateur de contournement ou « bypass » dans la suite de ce mémoire. Le paramètre « bypass » peut prendre par exemple les valeurs suivantes: « oui » (« yes ») ou « non » (« no »). L'absence de ce paramètre signifie que cette extension de l'URI n'est pas applicable.

Concernant les réponses SIP, ce paramètre peut être ajouté par l'entité non joignable lors de l'insertion de son URI dans l'en-tête « Via » de la requête correspondante.

Concernant les requêtes, l'indicateur de contournement « bypass » peut être inséré dans l'URI de l'entité non joignable de plusieurs manières :
* Lors de la phase d'enregistrement de l'entité émettrice dans le réseau, l'URI de l'entité intermédiaire enrichi du paramètre « bypass » est inséré dans l'en-tête « Path » du message REGISTER ou l'en-tête « Service-Route » dans le message 200 OK de réponse au message REGISTER.
   L'en-tête « Path » est utilisé lors de la phase d'enregistrement d'un terminal afin d'enregistrer le chemin sous forme d'une liste d'URIs pour atteindre ce terminal. Cette information est ensuite utilisée par le serveur proxy S-CSCF ayant enregistré ce terminal pour indiquer, dans l'en-tête « Route » des requêtes initiales qui sont destinées au terminal, le chemin de signalisation permettant d'atteindre ce terminal.
   L'en-tête « Service-Route » est utilisé pour enregistrer le chemin permettant d'atteindre le serveur proxy S-CSCF S gérant les services de l'usager. Ce chemin est ensuite inséré dans l'en-tête « Route » des requêtes initiales émises par le terminal enregistré afin que ces requêtes soient routées vers le S-CSCF. L'en-tête « Service-Route » est inséré dans le message 200 OK d'acceptation de l'enregistrement, en réponse à la requête REGISTER émise par le proxy ayant enregistré ce terminal.
* L'indicateur de contournement « bypass » peut être présent dans des URIs constituant l'en-tête « Route » lorsque ces derniers sont prédéterminés. Ces URIs sont ajoutés par l'entité SIP émettrice de la requête initiale. Par exemple, le terminal A peut être configuré pour insérer dans l'en-tête « Route » des URIs d'entités prédéterminées qui lui ont été communiqués préalablement à l'émission du message de requête initiale.
* L'URI de l'entité intermédiaire, complété de l'indicateur de contournement « bypass », est inséré par ladite entité intermédiaire dans l'en-tête « Record-Route » au passage d'un message de requête initiale. Cet en-tête « Record-Route » est ensuite reçu par l'entité émettrice du message de requête initiale dans un message de réponse à la requête initiale et recopié par l'entité émettrice dans l'en-tête « Route » d'un message de requête subséquente.
* L'indicateur de contournement « bypass » est inséré dans l'en-tête « Route » par une entité intermédiaire, autre que l'entité intermédiaire concernée, au passage d'un message de requête initiale.

On notera que le paramètre « bypass » peut être enrichi par d'autres valeurs permettant de prendre en compte le contexte dans lequel le message est reçu et le type de message. Par exemple :
- *messageType* : l'entité ne peut être contournée que s'il s'agit d'un message donné par ce paramètre,
- *earlyDialog* : l'entité ne peut être contournée que si le message concerné est reçu dans un dialogue SIP anticipé,
- *confirmedDialog* : l'entité ne peut être contournée que si le message concerné est reçu dans un dialogue SIP confirmé.

Les définitions du dialogue SIP confirmé et du dialogue SIP anticipé sont données dans la recommandation RFC3261.

Lors de l'émission d'un message SIP de requête, si une entité décide de contourner une entité intermédiaire dont l'URI est le premier dans l'en-tête « Route », elle doit supprimer l'URI de cette entité intermédiaire de l'en-tête « Route ». Elle applique ensuite à la requête ainsi modifiée les procédures de routage standard définies dans le protocole SIP. Cette opération peut être répétée si le noeud suivant dans le chemin de signalisation défini par l'en-tête « Route » est aussi inaccessible. Ainsi, plusieurs noeuds peuvent être contournés à la fois.

De même, lors de l'émission d'un message SIP de réponse, si une entité décide de contourner une entité intermédiaire dont l'URI est le premier dans l'en-tête « Via », elle doit supprimer l'URI de cette entité intermédiaire de l'en-tête « Via ». Elle applique ensuite à la réponse ainsi modifiée les procédures de routage standard dans le protocole SIP. Cette opération peut être répétée si le noeud suivant dans le chemin de signalisation défini par l'en-tête « Via » est aussi inaccessible. Ainsi, plusieurs noeuds peuvent être contournés à la fois.

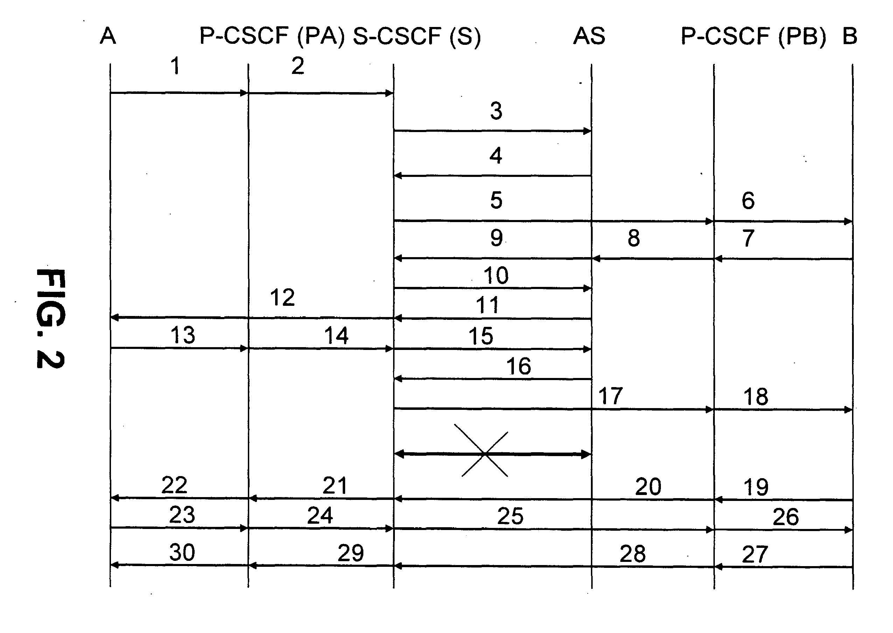

Une illustration de l'invention va maintenant être présentée en référence à la figure 2, mettant en oeuvre le service de « transfert d'appel » dans le cas d'une architecture IMS. Le transfert d'appel peut être invoqué à tout moment de l'appel par l'usager abonné à ce service, représentant l'entité émettrice.

Le mécanisme d'invocation des serveurs d'application AS, actuellement défini par le 3GPP, ne permet l'invocation d'un AS que sur la première requête initiant la session ou l'appel. Ainsi, vu que le serveur d'application AS de transfert d'appel doit pouvoir intervenir à tout moment de l'appel, ce dernier doit être invoqué et inséré dans le chemin de la signalisation SIP pour tout appel impliquant un abonné au service de transfert dès le début de l'appel. Afin de permettre aux appels passant par ce serveur de continuer à être transmis normalement dans le cas où il n'est plus disponible, ce dernier ajoute le paramètre « bypass = yes » dans son URI avant de l'insérer dans l'en-tête « Record-Route » de la requête initiale. Ainsi, si ce serveur d'application AS tombe en panne au cours de l'établissement de l'appel où une fois l'appel établi, le S-CSCF S le contournera.
1. A envoie le message de requête INVITE au P-CSCF de A, PA, auquel il est rattaché, pour initier un appel vers B. Ce message contient dans l'en-tête « Route » l'URI du S-CSCF S chargé d'exécuter les services de A ainsi que l'URI du proxy PA. L'entité PA est l'entité intermédiaire faisant partie du chemin de signalisation entre le terminal A et le S-CSCF S.
2. Le P-CSCF PA supprime son URI de l'en-tête « Route » puis envoie la requête au S-CSCF S dont l'URI est devenue le premier de cet l'en-tête après avoir ajouté l'en-tête « Record-Route » contenant son URI pour qu'il puisse recevoir les requêtes subséquentes.
3. Le S-CSCF S détermine que A est abonné au service de transfert d'appel et décide d'invoquer l'entité AS chargée de fournir ce service. Le S-CSCF S ajoute l'URI de l'AS « transfert » suivi de son propre URI, afin que la requête revienne vers S après passage par l'AS « transfert », dans l'en-tête « Route » de la requête INVITE avant de la transférer à l'AS « transfert ».
4. L'AS « transfert » ajoute son URI dans l'en-tête « Record-Route » pour rester dans le chemin de signalisation de cet appel et pouvoir fournir le service de transfert dans le cas où ce dernier est invoqué par A, et renvoie la requête INVITE au S-CSCF S dont l'URI est le suivant dans l'en-tête « Route ». L'URI de l'AS « transfert » contient le paramètre « bypass = yes » afin d'indiquer que cet AS peut être contourné s'il devient non joignable.
5. Le S-CSCF S ajoute son URI dans l'en-tête « Record-Route » avant d'envoyer le message de requête INVITE au P-CSCF de B PB auquel B est rattaché.
6. Le P-CSCF PB ajoute son URI dans l'en-tête « Record-Route » avant d'envoyer la requête INVITE à B.
7, 8, 9, 10, 11 et 12. B accepte l'appel de A en envoyant un message de réponse 200 OK. Cette réponse est routée jusqu'à A en suivant le chemin inverse traversé par la requête INVITE empilé dans l'en-tête « Via » lors du passage de la requête INVITE. Cette réponse contient l'en-tête « Record-Route » que B a reçu dans le message INVITE afin d'indiquer à A les entités intermédiaires de l'appel.
13, 14, 15, 16, 17, 18. A acquitte la réponse 200 OK en envoyant la requête ACK. Cette requête suit le chemin empilé dans l'en-tête « Record-Route » lors du passage de la requête INVITE initiale. A insère l'en-tête « Route » dans la requête ACK contenant les URIs reçus dans l'en-tête « Record-Route » de la réponse SIP 200 OK à la requête INVITE. La réponse 200 OK peut être précédée par d'autres réponses provisionnelles, notamment la réponse 180 « Ringing » indiquant que B est alerté. Ces réponses ainsi que l'en-tête « Route » de la requête ACK et l'en-tête « Via » de la réponse 200 OK ne sont pas représentés dans ce diagramme pour raison de simplification.
19. B envoie un message de requête re-INVITE à destination de A. Cette requête peut être envoyée pour renégocier les paramètres de la session média, tels que des changements de codecs par exemple, ou pour rafraîchir la session établie par exemple.
20. Le P-CSCF PB route la requête re-INVITE vers le S-CSCF S en se basant sur l'en-tête « Route ».
21. Le S-CSCF S détermine que l'AS « transfert » n'est plus joignable et décide de le contourner car l'URI de cet AS reçu dans l'en-tête "Route" contient le paramètre « bypass = yes ». Pour ce faire, il supprime l'URI de l'AS « transfert » ainsi que son URI de l'en-tête « Route », puis il ré-applique les procédures de routage à cette requête re-INVITE ainsi modifiée : il envoie la requête re-INVITE au P-CSCF PA dont l'URI se trouve le premier de l'en-tête « Route ».
22. Le P-CSCF PA prolonge la requête re-INVITE à A.
23, 24, 25, et 26. A accepte la requête re-INVITE en envoyant la réponse 200 OK. Cette réponse suit le chemin inverse traversé par la requête re-INVITE.
27, 28, 29, 30. B acquitte cette réponse 200 OK par la requête ACK. Cette requête est routée de la même manière que la requête re-INVITE : l'AS « transfert » est contourné.

## Revendications

1. Procédé de routage dans un réseau de télécommunication d'un message session Initiation Protocol SIP destiné à être routé à travers des entités intermédiaires constituant des noeuds d'un chemin de signalisation **caractérisé en ce qu'**il comprend une étape de contournement d'au moins une entité intermédiaire apte à être contournée en cas d'indisponibilité, ladite étape de contournement étant réalisée par suppression de l'identité Uniform Resource Identifier URI de ladite entité intermédiaire à contourner dans un en-tête « Route » ou « Via » d'un message SIP contenant la liste des identités des entités à traverser.

2. Procédé selon la revendication 1, comprenant une étape destinée à déterminer si une entité intermédiaire est apte à être contournée en cas d'indisponibilité.

3. Procédé selon la revendication 2, dans lequel ladite étape de détermination est mise en oeuvre par une entité au moyen d'une donnée locale indiquant si ladite entité intermédiaire est apte à être contournée.

4. Procédé selon la revendication 2, dans lequel ladite étape de détermination est mise en oeuvre par une entité en consultant une base de données externe indiquant si ladite entité intermédiaire est apte à être contournée.

5. Procédé selon la revendication 2, dans lequel ladite étape de détermination est mise en oeuvre par insertion dans un en-tête de routage dudit message SIP un indicateur de contournement « bypass » de ladite entité intermédiaire apte à être contournée.

6. Procédé selon la revendication 5, **caractérisé en ce que** ledit indicateur de contournement de ladite entité intermédiaire est communiqué à l'entité émettrice d'un message de requête initiale lors de l'enregistrement de ladite entité émettrice dans le réseau de télécommunication.

7. Procédé selon la revendication 6, **caractérisé en ce que** ledit indicateur de contournement de ladite entité intermédiaire est communiqué à l'entité émettrice préalablement à l'émission d'un message de requête initiale.

8. Entité intermédiaire constituant un noeud d'un chemin de signalisation pour le routage d'un message Session Initiation Protocol SIP dans un réseau de télécommunication, **caractérisé en ce que** ladite entité intermédiaire est apte à insérer dans un en-tête de routage dudit message SIP un indicateur de contournement lorsque ladite entité est en situation d'indisponibilité.

9. Entité constituant un noeud d'un chemin de signalisation pour le routage d'un message Session Initiation Protocol SIP dans un réseau de télécommunication, **caractérisé en ce que** ladite entité comprend des moyens pour contourner une entité intermédiaire en cas d'indisponibilité de ladite entité intermédiaire, aptes à supprimer l'identité Uniform Resource Identifier URI de ladite entité intermédiaire à contourner dans un en-tête « Route » ou, « Via » d'un message SIP contenant la liste des identités des entités à traverser.

10. Entité selon la revendication 9, comprenant des moyens pour déterminer si une entité intermédiaire est apte à être contournée en cas d'indisponibilité.

11. Programme d'ordinateur comprenant des instructions de programme pour la mise en oeuvre du procédé selon l'une quelconque des revendications 1 à 7 lorsque ledit programme est exécuté par un ordinateur.

12. Signal transportant un message Session Initiation Protocol SIP comprenant dans un en-tête de routage un indicateur de contournement « bypass » d'au moins une entité intermédiaire apte à être contournée en cas d'indisponibilité dans un chemin de signalisation.

## Claims

1. Method of routing, in a telecommunication network, a Session Initiation Protocol SIP message intended for routing through intermediate entities constituting nodes of a signalling path, **characterized in that** it comprises a step of bypassing at least one intermediate entity able to be bypassed in case of unavailability, said bypassing step being performed by deleting the Uniform Resource Identifier URI identity of said intermediate entity to be bypassed in a "route" or "via" header of an SIP message containing the list of the identities of the entities to be crossed.

2. Method according to Claim 1, comprising a step for determining whether an intermediate entity is able to be bypassed in case of unavailability.

3. Method according to Claim 2, wherein said determination step is implemented by an entity by means of a local datum indicating whether said intermediate entity is able to be bypassed.

4. Method according to Claim 2, wherein said determination step is implemented by an entity by consulting an external database indicating whether said intermediate entity is able to be bypassed.

5. Method according to Claim 2, wherein said determination step is implemented by inserting into a routing header of said SIP message a "bypass" indicator for said intermediate entity able to be bypassed.

6. Method according to Claim 5, **characterized in that** said bypass indicator for said intermediate entity is communicated to the entity sending an initial request message when registering said sending entity in the telecommunication network.

7. Method according to Claim 6, **characterized in that** said bypass indicator for said intermediate entity is communicated to the sending entity prior to the sending of an initial request message.

8. Intermediate entity constituting a node of a signalling path for routing a Session Initiation Protocol SIP message in a telecommunication network, **characterized in that** said intermediate entity is able to insert into a routing header of said SIP message a bypass indicator when said entity is in a situation of unavailability.

9. Entity constituting a node of a signalling path for routing a Session Initiation Protocol SIP message in a telecommunication network, **characterized in that** said entity comprises means for bypassing an intermediate entity in case of unavailability of said intermediate entity, able to delete the Uniform Resource Identifier URI identity of said intermediate entity to be bypassed in a "route" or "via" header of an SIP message containing the list of the identities of the entities to be crossed.

10. Entity according to Claim 9, comprising means for determining whether an intermediate entity is able to be bypassed in case of unavailability.

11. Computer program comprising program instructions for implementing the method according to any one of Claims 1 to 7 when said program is executed by a computer.

12. Signal transporting a Session Initiation Protocol SIP message comprising, in a routing header, a bypass indicator for at least one intermediate entity able to be bypassed in case of unavailability in a signalling path.

## Patentansprüche

1. Verfahren zum Routen einer Session-Initiation-Protocol-Mitteilung SIP in einem Telekommunikationsnetz, die dazu bestimmt ist, über Zwischenentitäten geroutet zu werden, welche Knoten eines Signalisierungswegs bilden, **dadurch gekennzeichnet, dass** es einen Schritt der Umgehung mindestens einer Zwischenentität enthält, die im Fall einer Nichtverfügbarkeit umgangen werden kann, wobei der Umgehungsschritt durch Unterdrückung der Identität Uniform Resource Identifier URI der zu umgehenden Zwischenentität in einer Kopfzeile "Route" oder "Via" einer SIP-Mitteilung durchgeführt wird, die die Liste der Identitäten der zu durchquerenden Entitäten enthält.

2. Verfahren nach Anspruch 1, das einen Schritt enthält, der dazu bestimmt ist, zu ermitteln, ob eine Zwischenentität im Fall der Nichtverfügbarkeit umgangen werden kann.

3. Verfahren nach Anspruch 2, bei dem der Ermittlungsschritt von einer Entität mittels eines lokalen Datenwerts durchgeführt wird, der angibt, ob die Zwischenentität umgangen werden kann.

4. Verfahren nach Anspruch 2, bei dem der Ermittlungsschritt von einer Entität durchgeführt wird, indem sie eine externe Datenbank konsultiert, die angibt, ob die Zwischenentität umgangen werden kann.

5. Verfahren nach Anspruch 2, bei dem der Ermittlungsschritt durch Einfügen eines Umgehungsindikators "bypass" der Zwischenentität, die umgangen werden kann, in eine Routing-Kopfzeile der SIP-Mitteilung durchgeführt wird.

6. Verfahren nach Anspruch 5, **dadurch gekennzeichnet, dass** der Umgehungsindikator der Zwischenentität der eine ursprüngliche Anforderungsmitteilung sendenden Entität beim Speichern der sendenden Entität im Telekommunikationsnetz mitgeteilt wird.

7. Verfahren nach Anspruch 6, **dadurch gekennzeichnet, dass** der Umgehungsindikator der Zwischenentität der sendenden Einheit vor dem Senden einer ursprünglichen Anforderungsmitteilung mitgeteilt wird.

8. Zwischenentität, die einen Knoten eines Signalisierungswegs zum Routen einer Session-Initiation-Protocol-Mitteilung SIP in einem Telekommunikationsnetz bildet, **dadurch gekennzeichnet, dass** die Zwischenentität in eine Routing-Kopfzeile der SIP-Mitteilung einen Umgehungsindikator einfügen kann, wenn die Entität in der Situation der Nichtverfügbarkeit ist.

9. Entität, die einen Knoten eines Signalisierungswegs zum Routen einer Session-Initiation-Protocol-Mitteilung SIP in einem Telekommunikationsnetz bildet, **dadurch gekennzeichnet, dass** die Entität Einrichtungen enthält, um eine Zwischenentität im Fall einer Nichtverfügbarkeit der Zwischenentität zu umgehen, die die Identität Uniform Resource Identifier URI der zu umgehenden Zwischenentität in einer Kopfzeile "Route" oder "Via" einer SIP-Mitteilung unterdrücken können, die die Liste der zu durchquerenden Identitäten enthält.

10. Entität nach Anspruch 9, die Einrichtungen enthält, um zu ermitteln, ob eine Zwischenentität im Fall einer Nichtverfügbarkeit umgangen werden kann.

11. Computerprogramm, das Programmanweisungen zur Durchführung des Verfahrens nach einem der Ansprüche 1 bis 7 enthält, wenn das Programm von einem Computer ausgeführt wird.

12. Signal, das eine Session-Initiation-Protocol-Mitteilung SIP transportiert, die in einer Routing-Kopfzeile einen Umgehungsindikator "bypass" mindestens einer Zwischenentität enthält, die im Fall einer Nichtverfügbarkeit in einem Signalisierungsweg umgangen werden kann.
